# EUROPÄISCHE PATENTSCHRIFT

(11) **EP 2 552 716 B1**
(45) Veröffentlichungstag und Bekanntmachung des Hinweises auf die Patenterteilung: **04.06.2014**
(21) Anmeldenummer: 11711545.1
(22) Anmeldetag: 29.03.2011
(51) Int. Cl.: B60D 1/64, B60T 7/20, B60T 17/04, B60T 17/18

(54) **ANORDNUNG ZUR DRUCKLUFTKOPPLUNG EINES ANHÄNGERS AN EIN ZUGFAHRZEUG**
ARRANGEMENT FOR COMPRESSED AIR COUPLING OF A TRAILER TO A TRACTOR VEHICLE
AGENCEMENT POUR L'ACCOUPLEMENT PAR AIR COMPRIMÉ D'UNE REMORQUE À UN VÉHICULE TRACTEUR

(30) Priorität: 31.03.2010 DE 102010013731
(43) Veröffentlichungstag der Anmeldung: 06.02.2013
(73) Patentinhaber: KNORR-BREMSE Systeme für Nutzfahrzeuge GmbH, 80809 München (DE)
(72) Erfinder: MUSER, Michael, 85276 Pfaffenhofen (DE); PAHL, Stefan, 82256 Fürstenfeldbruck (DE); SOVÁGÓ, Szabolcs, H-6000 Kecskemét (HU); DALI, István, H-6000 Kecskemét (HU); PAPP, Lajos, H-6100 Kiskunfélegyháza (HU); KONCZ, László, H-6000 Kecskemét (HU); MAJLATH, Attila, H-6000 Kecskemét (HU)
(74) Vertreter: Schönmann, Kurt
(86) Internationale Anmeldenummer: PCT/EP2011/054814
(87) Internationale Veröffentlichungsnummer: WO 2011/120961

(56) Entgegenhaltungen:
- WO-A1-00/35729
- WO-A1-01/60645
- US-A1- 2009 091 179

## Beschreibung

### Gebiet der Erfindung

Die vorliegende Erfindung betrifft eine Anordnung zur Kopplung eines Anhängers an einem Zugfahrzeug über eine Speiseleitung und eine parallelverlaufende Bremsleitung eines Druckluftbremssystems mit einem Paar von je zugeordneten miteinander korrespondierend gestalteten Kupplungsköpfen.

### Hintergrund der Erfindung

Viele aus Zugfahrzeug und Anhänger bestehende Fahrzeugkombinationen umfassen zwei Druckluftkreise, um eine pneumatische Verbindung zwischen dem Bremssystem des Zugfahrzeuges und dem Bremssystem des Anhängers herzustellen.

Die EP 0 378 811 B1 offenbart ein derartiges Bremssystem mit zumindest einem Druckluftkreis, der durch ein Bremsventil gesteuert auch ein Anhängersteuerventil für die Drucksteuerung im Bremskreis des Anhängers umfasst und ein Zweileitungsbremssystem mit einem Anhängerbremsventil, das mit dem Anhängersteuerventil über eine Bremsleitung sowie Speiseleitung des Anhängers verbunden ist. Auf diese Weise ist die Speiseleitung und die Bremsleitung des Zugfahrzeugkreises mit den jeweiligen Leitungen des Anhängerkreises gekoppelt. Der Speisedruck wird über die Speiseleitung gewöhnlich zu einem Behälter des Anhängers geleitet, um dort für die Speisung des Anhängerbremsventils zur Verfügung zu stehen. Die Bremsleitung ist gewöhnlich mit dem Steuereingang des Anhängerbremsventils über ein Lastventil verbunden. Die Bremsanschlüsse des Anhängerbremsventils gehen direkt oder indirekt zur Beaufschlagung der Bremskolben an die Achsen des Anhängerfahrzeugs.

Die DE 199 31 162 A1 offenbart einen mechanischen Kupplungskopf zur Schaffung einer Druckluftverbindung zwischen einem Zugfahrzeug und einem Anhänger. Für eine Zweileitungsverbindung sind zwei solcher Kupplungsköpfe erforderlich. Jeder Kupplungskopf umfasst mechanisch betätigbare Verriegelungsmittel zur Sicherstellung einer zuverlässigen Druckluftverbindung der Speiseleitung bzw. der Bremsleitung. Weiterhin ist ein Filterelement direkt in den Kupplungskopf integriert.

WO 01/60645 A1 offenbart eine Anhängerkopplung in dem ein unbeabsichtigtes Wegrollen des Anhängers durch die Kopplung der elektronischen und pneumatischen Leitungen in einer bestimmten Sequenz vermieden wird.

Gewöhnlich kommen zwei Arten von Kupplungsköpfen zur Anwendung, wobei eine Art von Kupplungsköpfen für die Speiseleitung und die andere Art von Kupplungsköpfen für die Bremsleitung vorgesehen ist. Durch spezielle Verriegelungsmittel am Kupplungskopf für die Speiseleitung des Zugfahrzeuges kann eine Ankupplung ausschließlich mit einem zugeordneten Kupplungskopf der Speiseleitung des Anhängers erfolgen. Der Kupplungskopf der Bremsleitung des Zugfahrzeuges kann ebenfalls nur mit dem zugeordneten Kupplungskopf der Bremsleitung des Anhängers verbunden werden.

Allerdings ist die Reihenfolge der An- und Abkupplung der bisher verwendeten Kupplungsköpfe nicht festgelegt. So ist es möglich, dass die Speiseleitung zuerst verbunden wird. Es ist auch möglich, dass die Bremsleitung zuerst abgekoppelt wird. Durch diese Möglichkeit einer unkoordinierten Kupplung und Abkupplung kann das Zugfahrzeug oder dessen Anhänger durch Unterbrechung der Bremsung versehentlich während des Kupplungs-oder Abkupplungsvorgangs wegrollen.

Es ist daher die Aufgabe der vorliegende Erfindung, eine Anordnung zur Ankopplung eines Anhängers an ein Zugfahrzeug zu schaffen, welche ein versehentliches Wegrollen während des Kupplungsvorgangs zuverlässig verhindert, und welche mit bisher verwendeten Arten von Kupplungsköpfen einer Speiseleitung und einer Bremsleitung geometrisch kompatibel ist.

### Kurze Beschreibung der Erfindung

Gemäß der Erfindung sind spezielle Verriegelungsmittel zur Verhinderung einer vorherigen Ankopplung der Speiseleitung vor Ankoppelung der Bremsleitung vorgesehen, wobei die vorherige Ankopplung der Bremsleitung ein Entsperrsignal für die besagten Verriegelungsmittel der Speiseleitung erzeugt.

Durch die erfindungsgemäße Lösung wird es wegen der mechanischen Verriegelungsmittel unmöglich, zuerst die Speiseleitung anzukoppeln. Die mechanischen Verriegelungsmittel können dabei als Sperrriegel oder dergleichen ausgebildet sein, welche an der Außenoberfläche des Kupplungskopfes angeordnet sind. Ferner wird beim initialen Koppeln der Bremsleitung ein Signal zum Entsperren der Verriegelungsmittel für die Speiseleitung generiert, welche nachfolgend angekoppelt wird.

Nachdem die Speiseleitung ebenfalls angekoppelt worden ist, kann ein Verriegelungssignal für die Verriegelungsmittel der Bremsleitung erzeugt werden, um die Bremsleitung gegen versehentliches Entkoppeln vor Entkopplung der Speiseleitung zu schützen.

Hierdurch ist es möglich, als erstes nur die Speiseleitung zu entkoppeln. Eine Entkopplung der Speiseleitung als erstes kann darüber hinaus auch ein Entriegelungssignal für die Verriegelungsmittel der Bremsleitung erzeugen. Auf diese Weise ist eine komplette Entkopplung beider Pneumatikleitungen gemäß einer definierten Reihenfolge der Kopplungs-und Entkopplungsweise durchführbar.

Im Rahmen der vorliegenden Erfindung kann das Verriegelungssignal sowie auch das Entriegelungssignal für die Verriegelungsmittel unterschiedlicher Art sein. Insoweit ist es möglich, hierfür ein pneumatisches Signal, ein elektrisches Signal, ein mechanisches Signal oder ein magnetisches Signal zu nutzen. Zusätzlich sollte in Notsituationen, wenn kein pneumatisches, mechanisches elektrisches oder magnetisches Signal zur Verfügung steht, eine manuelle Entriegelung der Kupplungsköpfe nicht ausgeschlossen sein.

Im Falle der Nutzung des pneumatischen Signals für die Verriegelungsmittel kann das pneumatische Signal direkt einem elektropneumatisch oder pneumatisch vorgesteuertem Ventil des Bremssystems entnommen werden. Ebenfalls kann im Falle eines elektrischen Signals zur Ansteuerung der Verriegelungsmittel dieses durch eine elektrische oder elektronische Steuereinheit oder elektropneumatische Komponenten generiert werden, wie mit elektrischen Spulen oder dergleichen angesteuerte Vorsteuerventile.

Gemäß eines anderen Aspekts der Erfmdung wird vorgeschlagen, das Paar von Kupplungsköpfen seitens des Zugfahrzeugs und/oder seitens des Anhängers in Form einer einzigen Blockeinheit als eine Art Monoblock zu realisieren. Stattdessen ist es jedoch auch denkbar, zwei einzelne Kupplungskopfanordnungen als stand-alone-Variante zu verwenden.

Bei der bevorzugten Monoblockvariante sollten zusätzliche Verriegelungsmittel zum Verhindern eines ungewollten Entkoppelns durch Gravitation oder Schwingungen integriert werden. Bei der stand-alone-Variante sollte zusätzlich ein Kommunikationskanal zwischen den beiden Kupplungsköpfen vorgesehen werden, um die Kopplungs- und Entkopplungsreihenfolge gemäß der vorliegenden Erfindung zu realisieren.

Die vorstehend beschriebene technische Lösung kann auf pneumatische Verbindungen zwischen einem Zugfahrzeug und einem Anhänger gemäß des Standards ISO 1728 oder des sogenannten Typ C-Standards angewendet werden, der in Großbritannien genutzt wird und spezielle Merkmale von Kupplungsköpfen spezifiziert.

Daneben ist es auch möglich, die Verriegelungsmittel über ein externes Signal anzusteuern, welches durch andere Steuereinheiten oder Ventile des Bremssystems des Anhängers und/oder Zugfahrzeugs bereitgestellt werden kann.

### Kurze Beschreibung der Zeichnungen

Weitere, die Erfindung verbessernde Maßnahmen werden nachfolgend gemeinsam mit der Beschreibung bevorzugter Ausführungsbeispiele anhand der Zeichnungen näher dargestellt. Es zeigt:
- Figur 1: eine schematische Ansicht einer Monoblock-Variante, befestigt am Anhänger,
- Figur 2: eine schematische Ansicht einer stand-alone-Variante, befestigt am Anhänger,
- Figur 3: eine schematische Ansicht einer Monoblock-Variante mit Kupplungsköpfen für ein Zugfahrzeug in eingekuppelter Position, und
- Figur 4: eine schematische Ansicht einer stand-alone-Variante mit Kupplungsköpfen für ein Zugfahrzeug in der eingekoppelten Position.

### Detaillierte Beschreibung

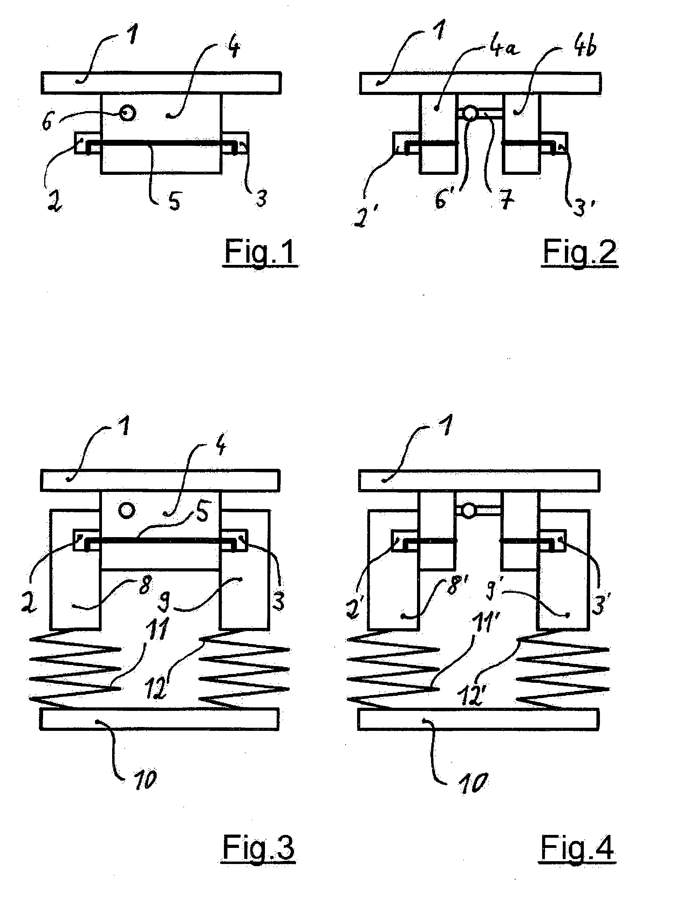

Gemäß Figur 1 ist an einem Anhänger 1 eine Blockeinheit 4 angebracht. Die Blockeinheit 4 ist mit einem Kupplungskopf 2 für die Speiseleitung und einem Kupplungskopf 3 für die Bremsleitung ausgestattet. Beide Kupplungsköpfe 2 und 3 wirken mit einem Sperrriegel 5 zusammen, der als Verriegelungsmittel zur Verhinderung einer Ankopplung des Kupplungskopfes 2 der Speiseleitung vor dem Kupplungskopf 3 der Bremsleitung dient. An der Blockeinheit 4 ist ein pneumatischer Anschluss 6 zur Verbindung mit einer vorherigen externen Signalquelle an die Blockeinheit 4 vorgesehen, um diese gemäß der Reihenfolge der vorliegenden Erfindung zu betreiben.

In Figur 2 ist eine stand-alone-Variante gezeigt, wobei der Kupplungskopf 2' der Speiseleitung und auch der Kupplungskopf 3' der Bremsleitung in jeweils zugeordneten eigenen Gehäusen 4a bzw. 4b untergebracht sind.

Zwischen beiden Gehäusen 4a und 4b ist ein Verbindungskanal 7 vorhanden, um das Ver-oder Entriegelungssignal für den Kupplungskopf 2' der Speiseleitung und den Kupplungskopf 3' der Bremsleitung ausgehend vom Signalanschluss 6' zu den Kupplungsköpfen 2' und 3' zu transferieren.

Gemäß Figur 3 ist der Kupplungskopf 2 der Speiseleitung und der Kupplungskopf 3 der Bremsleitung der Blockeinheit 4 seitens des Anhängers 1 verbunden mit hierzu jeweils korrespondierenden Kupplungsköpfen 8 und 9, die seitens des Zugfahrzeugs 10 angeordnet sind. Der Kupplungskopf 8 der Speiseleitung des Zugfahrzeuges 10 ist so geformt, dass er lediglich zur Gestalt des Kupplungskopfes 2 der Speiseleitung des Anhängers 1 passt. Analog hierzu ist die Gestalt des Kupplungskopfes 9 der Bremsleitung des Zugfahrzeugs 10 passend zur Gestalt des Kupplungskopfes 3 der Bremsleitung des Anhängers 1 ausgebildet.

Weiterhin ist zwischen dem Anhänger 1 und dessen Zugfahrzeug 10 eine Speiseleitung 11 und eine Bremsleitung 12 vorgesehen, die als flexible Druckmittelleitungen ausgebildet sind.

Der Sperrriegel stellt sicher, dass eine Kopplung der Speiseleitung 11 als erstes verhindert wird, indem die Kopplung der Bremsleitung 12 als erstes ein Entsperrsignal für die Verriegelungsmittel seitens der Speiseleitung 11 erzeugt. Weiterhin generiert eine Kopplung der Speiseleitung 11 ein Verriegelungssignal für die Verriegelungsmittel der Bremsleitung 12, um eine Abkopplung der Bremsleitung 12 als erstes zu verhindern.

Andererseits generiert eine Abkopplung der Speiseleitung 11 ein Entsperrsignal für die Verriegelungsmittel der Bremsleitung 12, um die angestrebte Kupplungs- und Abkupplungssequenz nach der vorliegenden Erfindung zu realisieren.

Gemäß Figur 4 ist die Verbindung der Speiseleitung 11' und die Verbindung der Bremsleitung 12' als stand-alone-Variante illustriert, welche analog zur vorstehend beschriebenen Variante funktioniert.

Die Erfindung ist nicht beschränkt auf die vorstehend beschriebenen bevorzugten Ausführungsbeispiele und kann im Rahmen des Schutzbereichs der nachfolgenden Ansprüche auch variiert werden, insbesondere um weitere technische Mittel zur Verhinderung einer unbeabsichtigten Abkopplung durch Gravitationskräfte, Schwingungen oder dergleichen. Alternativ können die existierenden Verriegelungsmittel zur Umsetzung der Kopplungs- und Abkopplungsreihenfolge gemäß der vorliegenden Erfindung ebenfalls zu diesem Zweck angesteuert werden.

### Bezugszeichenliste

- 1: Anhänger
- 2: Kupplungskopf des Anhängers für die Speiseleitung
- 3: Kupplungskopf des Anhängers für die Bremsleitung
- 4: Blockeinheit
- 4a: Gehäuse
- 4b: Gehäuse
- 5: Sperrriegel
- 6: Signalanschluss
- 7: Kommunikationskanal
- 8: Kupplungskopf des Zugfahrzeugs für die Speiseleitung
- 9: Kupplungskopf des Zugfahrzeug für die Bremsleitung
- 10: Zugfahrzeug
- 11: Speiseleitung
- 12: Bremsleitung

## Patentansprüche

1. Anordnung zur Druckluftkopplung eines Anhängers (1) an ein Zugfahrzeug (10) über eine Speiseleitung (11) und eine Bremsleitung (12) eines Druckluftbremssystems mittels je eines Paares korrespondierend geformter Kupplungsköpfe (2, 2'; 3, 3'),
**dadurch gekennzeichnet, dass** Verriegelungsmittel zum Vermeiden einer Ankopplung der Speiseleitung (11) vor einer Ankopplung der Bremsleitung (12) vorgesehen sind, wobei die vorherige Ankopplung der Bremsleitung (12) ein Entsperrsignal für die Verriegelungsmittel der Speiseleitung (11) generiert.

2. Anordnung nach Anspruch 1,
**dadurch gekennzeichnet, dass** eine Ankopplung der Speiseleitung (11) ein Sperrsignal für die Verriegelungsmittel der Bremsleitung (12) generiert, um eine vorherige Abkopplung der Bremsleitung (12) zu vermeiden.

3. Anordnung nach Anspruch 1 oder 2,
**dadurch gekennzeichnet, dass** eine Abkopplung der Speiseleitung (11) ein Entsperrsignal für die Verriegelungsmittel der Bremsleitung (12) generiert.

4. Anordnung nach einem der Ansprüche 1-3,
**dadurch gekennzeichnet, dass** das Verriegelungssignal und das Entsperrsignal für die Verriegelungsmittel ausgewählt ist aus einer Gruppe, umfassend ein pneumatisches Signal, ein elektrisches Signal, ein mechanisches Signal, ein magnetisches Signal.

5. Anordnung nach Anspruch 4,
**dadurch gekennzeichnet, dass** das pneumatische Verriegelungssignal und das Entsperrsignal für die Verriegelungsmittel durch ein elektropneumatisches oder pneumatisch vorgesteuertes Ventil des Bremssystems generiert werden.

6. Anordnung nach einem der Ansprüche 1-5,
**dadurch gekennzeichnet, dass** die Kupplungsköpfe (2, 3) des Anhängers (1) in eine Blockeinheit (4) integriert sind.

7. Anordnung nach Anspruch 6,
**dadurch gekennzeichnet, dass** jede Blockeinheit (4) weitere Verriegelungsmittel zur Sicherung der mechanischen Verbindung der Speiseleitung (11) und der Bremsleitung (12) gegen ein versehentliches Abkoppeln durch Gravität oder Schwingungen aufweist.

8. Anordnung nach Anspruch 6,
**dadurch gekennzeichnet, dass** die Blockeinheit (4) mit einem Kommunikationskanal (7) zwischen den beiden Kupplungsköpfen (2, 2'; 3, 3') ausgestattet ist.

9. Anordnung nach einem der vorstehenden Ansprüche,
**dadurch gekennzeichnet, dass** die geometrische Gestalt des Kupplungskopfes (8, 8') der Speiseleitung (11) des Zugfahrzeugs (10) nur passend ist mit der Gestalt der Kupplungsköpfe (2, 2') des Anhängers (1), und dass die geometrische Gestalt der Kupplungsköpfe (9, 9') der Bremsleitung (12) des Zugfahrzeugs (10) nur passend ist mit der Gestalt der Kupplungsköpfe (3, 3') des Anhängers (1) ist.

10. Nutzfahrzeug umfassend ein pneumatisches Bremssystems mit einer Anordnung zur Druckluftkupplung eines Anhängers (1) an einem Zugfahrzeug (10) nach mindestens einem der vorstehenden Ansprüche.

## Claims

1. Arrangement for the pneumatic coupling of a trailer (1) to a tractor vehicle (10) via a feed line (11) and a brake line (12) of an air brake system by means of one pair of correspondingly shaped coupling heads (2, 2'; 3, 3') each,
**characterised in that** locking means are provided for preventing a coupling of the feed line (11) before a coupling of the brake line (12), wherein the prior coupling of the brake line (12) generates an unblocking signal for the locking means of the feed line (11).

2. Arrangement according to claim 1,
**characterised in that** a coupling of the feed line (11) generates a blocking signal for the locking means of the brake line (12) in order to prevent a prior decoupling of the brake line (12).

3. Arrangement according to claim 1 or 2,
**characterised in that** a decoupling of the feed line (11) generates an unblocking signal for the locking means of the brake line (12).

4. Arrangement according to any of claims 1 to 3,
**characterised in that** the locking signal and the unblocking signal for the locking means are selected from a group comprising a pneumatic signal, an electric signal, a mechanical signal and a magnetic signal.

5. Arrangement according to claim 4,
**characterised in that** the pneumatic locking signal and the unblocking signal for the locking means are generated by an electropneumatic or pneumatically pilot-controlled valve of the brake system.

6. Arrangement according to any of claims 1 to 5,
**characterised in that** the coupling heads (2, 3) of the trailer (1) are integrated into a block unit (4).

7. Arrangement according to claim 6,
**characterised in that** each block unit (4) has further locking means for securing the mechanical connection of the feed line (11) and of the brake line (12) so as to prevent an inadvertent decoupling owing to gravitational force or vibrations.

8. Arrangement according to claim 6,
**characterised in that** the block unit (4) is equipped with a communication duct (7) between the two coupling heads (2, 2'; 3, 3').

9. Arrangement according to any of the preceding claims,
**characterised in that** the geometric shape of the coupling head (8, 8') of the feed line (11) of the tractor vehicle (10) matches only the shape of the coupling heads (2, 2') of the trailer (1), and **in that** the geometric shape of the coupling heads (9, 9') of the brake line (12) of the tractor vehicle (10) matches only the shape of the coupling heads (3, 3') of the trailer (1).

10. Commercial vehicle comprising a pneumatic brake system having an arrangement for the pneumatic coupling of a trailer (1) to a tractor vehicle (10) according to one or more of the preceding claims.

## Revendications

1. Agencement d'attelage par air comprimé d'une remorque (1) à un véhicule (10) tracteur par une ligne (11) d'alimentation et par une ligne (12) de freinage d'un système de freinage à air comprimé au moyen de respectivement une paire de têtes (1, 3' ; 3, 3') d'attelage conformées de manière correspondante,
**caractérisé en ce qu'**il est prévu des moyens de verrouillage pour empêcher un accouplement de la ligne (11) d'alimentation avant un accouplement de la ligne (12) de freinage, l'accouplement précédent de la ligne (12) de freinage produisant un signal de déblocage des moyens de verrouillage de la ligne (11) d'alimentation.

2. Dispositif suivant la revendication 1,
**caractérisé en ce qu'**un accouplement de la ligne (11) d'alimentation produit un signal de blocage des moyens de verrouillage de la ligne (12) de freinage pour empêcher un désaccouplement précédent de la ligne (12) de freinage.

3. Dispositif suivant la revendication 1 ou 2,
**caractérisé en ce qu'**un désaccouplement de la ligne (11) d'alimentation produit un signal de déblocage des moyens de verrouillage de la ligne (12) de freinage.

4. Dispositif suivant l'une des revendications 1 à 3,,
**caractérisé en ce que** le signal de verrouillage et le signal de déblocage des moyens de verrouillage sont choisis dans un groupe comprenant un signal pneumatique, un signal électrique, un signal mécanique, un signal magnétique.

5. Dispositif suivant la revendication 4,
**caractérisé en ce que** le signal de verrouillage pneumatique et le signal de déblocage des moyens de verrouillage sont produits par une vanne du système de freinage, qui est électropneumatique où qui est pilotée pneumatiquement.

6. Dispositif suivant l'une des revendications 1 à 5,
**caractérisé en ce que** les têtes (2, 3) d'attelage de la remorque (1) sont intégrées dans un bloc (4).

7. Dispositif suivant la revendication 6,
**caractérisé en ce que** chaque bloc (4) a d'autres moyens de verrouillage pour sécuriser la liaison mécanique de la ligne (11) d'alimentation et de la ligne (12) de freinage vis-à-vis d'un découplage intempestif par la force de gravité ou sous l'effet de vibrations.

8. Dispositif suivant la revendication 6,
**caractérisé en ce que** le bloc (4) est équipé d'un canal (7) de communication entre les deux têtes (2, 2' ; 3, 3') d'attelage.

9. Dispositif suivant l'une des revendications précédentes,
**caractérisé en ce que** la forme géométrique de la tête (8, 8') d'accouplement de la ligne (11) d'alimentation du véhicule (10) tracteur ne s'adapte qu'à la forme des têtes (2, 2') d'attelage de la remorque (1) et **en ce que** la forme géométrique des têtes (9, 9') d'accouplement de la ligne (12) de freinage du véhicule (10) tracteur ne s'adapte qu'à la forme des têtes (3, 3') d'attelage de la remorque (1).

10. Véhicule utilitaire comprenant un système pneumatique de freinage ayant un agencement d'attelage par air comprimé d'une remorque (1) à un véhicule (10) tracteur suivant au moins l'une des revendications précédentes.
